# EUROPEAN PATENT APPLICATION

(11) **EP 4 632 713 A1**
(43) Date of publication of application: **15.10.2025**
(21) Application number: 24168956.1
(22) Date of filing: 08.04.2024
(51) Int. Cl.: G08G 1/16, B60W 30/09, B60W 30/095, B60W 40/068, B60W 40/072, B60W 50/00, B60W 50/14, G01S 13/931, G06V 20/58

(54) **METHOD FOR DETERMINING WHETHER A VEHICLE IS SLIDING, METHOD FOR CONTROLLING A FIRST VEHICLE, DATA PROCESSING APPARATUS, COMPUTER PROGRAM, AND COMPUTER-READABLE STORAGE MEDIUM**

(71) Applicant: Volvo Car Corporation, 405 31 Göteborg (SE)
(72) Inventor: PEREZ BARRERA, Oswaldo, 40531 Göteborg (SE); MORALES, Gerardo, 40531 Göteborg (SE)
(74) Representative: Maiwald GmbH

(57) **Abstract**

The disclosure relates to a method for determining whether a second vehicle (14) is sliding from a perspective of a first vehicle (10) or from a perspective of an infrastructure element. The method comprises obtaining first data indicative of an actual driving behavior of the second vehicle (14), obtaining second data indicative of an expected driving behavior of the second vehicle (14), and determining whether the second vehicle (14) is sliding or not based on a comparison of the first data and the second data. Further, the disclosure relates to a method for controlling the first vehicle (10). Moreover, the disclosure is directed to a data processing apparatus comprising means for carrying out any of said methods as well as a computer program and a computer-readable storage medium comprising instructions which, when executed by a computer, cause the computer to carry out any of said methods.

## Description

### TECHNICAL FIELD

The present disclosure relates to a method for determining whether a second vehicle is sliding.

Moreover, the present disclosure relates to a method for controlling a first vehicle.

Furthermore, the present disclosure is directed to a data processing apparatus, a computer program and a computer-readable storage medium.

### BACKGROUND ART

When a vehicle is travelling on a slippery road, for instance due to rain, snow and/or ice, the vehicle may slide and a human driver or an autonomous driver of the vehicle may not be able to control the vehicle movement to a satisfactory extent.

This may negatively affect road safety.

If a sliding vehicle can be detected, other traffic participants can be warned of or guided away from the sliding vehicle, thereby mitigating the dangers associated with sliding vehicles.

It is therefore an objective of the present invention to improve the detection of sliding vehicles.

### SUMMARY

The problem is at least partially solved or alleviated by the subject matter of the independent claims of the present disclosure, wherein further examples are incorporated in the dependent claims.

According to a first aspect, there is provided a method for determining whether a second vehicle is sliding. This is done from a perspective of a first vehicle or from a SE:TOP perspective of an infrastructure element. The method comprises:
- obtaining first data indicative of an actual driving behavior of the second vehicle,
- obtaining second data indicative of an expected driving behavior of the second vehicle, and
- determining whether the second vehicle is sliding or not based on a comparison of the first data and the second data.
In this context, sliding of the second vehicle is to be understood in that at least one wheel of the second vehicle experiences slippage beyond a predefined threshold with respect to a road surface. The predefined threshold of slippage may be defined as an absolute relative speed between a portion of a tire of the at least one wheel of the second vehicle and the road surface. In this context, the portion of the tire contacting the road surface is relevant. The predefined threshold may be 1 m/s, 2 m/s, 3 m/s or more. The predefined threshold of slippage may also be defined as a percentage of the relative speed between the portion of the tire and the road surface with respect to a traveling speed of the second vehicle. In this case, the predefined threshold may be 1 %, 2 %, 3% or more. It is emphasized that the sliding of the second vehicle is not determined by the second vehicle itself. Instead, the method for detecting whether the second vehicle sliding is executed from the perspective of the first vehicle, wherein the first vehicle and the second vehicle are different vehicles. In this context, the first vehicle can be moving or can be at a standstill. The method can be executed on the first vehicle or on any other computing device, e.g. a server or a cloud server, taking the perspective of the first vehicle. This means that the method can also be executed from the perspective of a stationary infrastructure element. An infrastructure element can be a traffic light, a road sign, a bridge or a house to which respective means, e.g. sensors, for obtaining the first data and the second data are attached. The data processing apparatus necessary for executing the method can also be attached to or housed in the infrastructure element. However, the data processing apparatus may also be hosted remotely and the obtained data can be sent to the data processing apparatus via a communication network. It is to be noted, that obtaining first data and obtaining second data is to be understood as receiving or determining first data and second data, respectively. Determining first data and second data involves acquiring the respective data, e.g. by a sensor or a data interface, wherein the acquisition is part of the method. Receiving first data and second data is to be understood from the perspective of a data processing apparatus to which the respective data is provided by a third entity. In this case, the acquisition of the respective data is not part of the method. The first data being indicative of an actual driving behavior of the second vehicle and the second data being indicative of an expected driving behavior of the second vehicle may be of the same type or of a different type. For example, the first data may be orientation data of the second vehicle and the second data may be orientation data of a road lane. In such a case, since the data are both orientation data, the first data and the second data may be provided as one single data stream from which the first data at the second data may be derived. In another example, the first data may relate to the location of the second vehicle over time and the second data may relate to an orientation of a steered wheel of the second vehicle. In this case, since the data are of different types, the first data and the second data may be provided as different data streams originating from different sensors or data interfaces of the first vehicle or of the infrastructure element. The comparison of the first data and the second data may involve determining a difference between the first data and the second data. A threshold for the difference between the first data and second data may be predefined. As soon as the difference between the first data and the second data equals or exceeds the predefined threshold, the second vehicle is determined to be sliding. In other words, the second vehicle is determined to be sliding if its actual driving behavior does not sufficiently match its expected driving behavior. When the difference between the first data and the second data is inferior to the predefined threshold, the second vehicle is determined not to be sliding. This is a reliable criterion to determine if the second vehicle is sliding or not. Having an information available indicating whether the second vehicle is sliding or not enhances road safety since other traffic participants, e.g. the first vehicle, are able to adapt to this.

In an example, the first data is indicative of a course of the actual driving behavior over time and/or the second data is indicative of a course of the expected driving behavior over time. A course of the actual driving behavior over time may describe a trajectory that the second vehicle has completed over the respective time period. The trajectory that the second vehicle has completed is based on at least two locations of the second vehicle at two different points in time. Of course, the trajectory that the second vehicle has completed can also be made up of more than two locations of the second vehicle at different points in time, particularly when the second vehicle has been driving a curve. The expected driving behavior over time may describe a trajectory that the second vehicle would have been expected to complete or is still expected to complete over a time period. When the actual vehicle trajectory does not match the expected vehicle trajectory, the second vehicle would depart from its expected trajectory, e.g. from a lane on which the vehicle is expected to be travelling. Hence, the first data being indicative of an actual vehicle trajectory and/or the second data being indicative of an expected vehicle trajectory helps determining a potentially hazardous departure of the second vehicle from its expected trajectory.

In an example, the second vehicle is determined to be sliding if the first data and/or the second data change by a predefined increment or more within a predefined time interval. In case the first data is indicative of the course of the actual driving behavior of the second vehicle over time and/or the second data is indicative of a course of the expected driving behavior of the second vehicle over time, the second vehicle may initially not be determined to be sliding because the difference between the first data and the second data is below the predefined threshold. However, the second vehicle may be determined to be sliding if the first data and/or the second data change abruptly or extremely quickly. For instance, the course of the actual driving behavior of the second vehicle or the course of the expected driving behavior of the second vehicle may change so drastically that it cannot reasonably be expected that the road wheels of the second vehicle have maintained or will maintain grip on a road surface without sliding. In an example in which a rotational speed of a wheel is used as an indicator, i.e. if the first data and the second data are indicative of a rotational speed, the predefined increment can be 90° per second, 120° per second, 150° per second or more.

In an example, the second data is generated based on first data associated with a first point in time which differs from the point in time to which the first data used for the comparison is associated. In other words, the first data and the second data are generated at different points in time. In more detail, first data is obtained which is indicative of an actual driving behavior of the second vehicle. Then, at a first point in time, the second data is derived from the first data or generated based on the first data. This may be done by extrapolating the first data. Subsequently, at a point in time different from the first point in time, first data associated with this point in time and the second data as derived from the first data at the first point in time are compared.

In an example, the first vehicle and the second vehicle may be traveling in opposite directions. In such a constellation, the expected trajectory of the second vehicle can be derived from a trajectory that the first vehicle has already completed. This is due to the fact that road lanes of different driving directions are usually adjacent to each other and therefore show similar curvature. Thus, a trajectory that the first vehicle has already completed can imaginarily and parallelly be shifted into a road lane of opposite direction on which the second vehicle is traveling. The shifted trajectory then becomes the expected trajectory of the second vehicle. Thus, in this example, the second data was generated before the second vehicle has actually completed the respective trajectory. A similar explanation holds when the first vehicle is driving ahead of the second vehicle. When the first vehicle is driving ahead of the second vehicle on the same lane, the trajectory that the first vehicle has completed does not need to be shifted at all. The trajectory which the first vehicle has completed can be taken as the expected trajectory of the second vehicle. When the first vehicle is driving ahead of the second vehicle on a different lane, for example on a highway, then the trajectory that the first vehicle has completed can be imaginarily and parallelly shifted into the lane on which the second vehicle is traveling. The shifted trajectory then becomes the expected trajectory of the second vehicle. The assumption behind this concept is again that adjacent road lanes show similar curvature. The first data and the second data being generated at different points in time generally helps determining if the actual driving behavior of the second vehicle meets an expected driving behavior that has been derived from second data that is of the same or of a different type than the first data.

In an example, the first data is indicative of a rotational speed of a wheel of the second vehicle and the second data is indicative of a rotational speed of a wheel of the second vehicle. The second vehicle is determined to be sliding if the first data and the second data indicate rotational speeds having a difference exceeding a predefined rotational speed threshold. In a first case, the wheel of the second vehicle which the first data and the second data is based on is the same wheel of the second vehicle. In this case, a rotational speed of the wheel at a first point in time serves as second data. A rotational speed of the wheel at a second point in time serves as first data. In this example, the first point in time precedes the second point in time. This case of the method helps determining that the second vehicle is sliding if the respective wheel of the second vehicle has suddenly lost or gained traction, e.g. due to a partly icy road. In the second case, the wheel of the second vehicle which the first data is based on and the wheel of the second vehicle which the second data is based on is a different wheel. Also in this case, it may be reliably determined whether the second vehicle is sliding or not.

In an example, the first data and the second data are indicative of a rotational speed of different wheels of the second vehicle respectively. In other words, the second vehicle is determined to be sliding if any two wheels of the second vehicle spin at different rotational speeds and the difference exceeds the predefined rotational speed threshold. Applying the predefined rotational speed threshold is important because when the vehicle is driving a curve, it may be normal that the steered wheels spin faster than the wheels that are not steered. This is because when the vehicle is travelling along a curve, the steered wheels may follow an imaginary circle with a radius larger than a radius of an imaginary circle that the non-steered road wheels follow. The predefined rotational speed threshold may be expressed in absolute terms, such as 5 revolutions per second, 10 revolutions per second, 15 revolutions per second or more or in relative terms such as 10 %, 20 %, 30 % or more of the rotational speed of the road wheel that is spinning faster. This example of the method has the effect that sliding of the second vehicle is reliably determined when the rotational speed of at least two of its road wheels differs by a predefined amount or more, which cannot be the case without any of the respective wheels slipping.

In an example, the first data is indicative of a traveling speed of the second vehicle and the second data is indicative of an actuation of a brake of the second vehicle. The second vehicle is determined to be sliding if the second data is indicative of the brake being actuated and the first data is indicative of a speed decreasing at a rate lower than a predefined rate threshold. Within this example of the method, the second data can be indicative of an actuation of a brake light of the second vehicle. The predefined rate threshold may be 1 m/s², 2 m/s², 3 m/s² or more. In simplified words, the second vehicle is determined to be sliding if it tries to brake but its speed does not decrease at an expected rate. This can particularly occur if the second vehicle is travelling on a road whose surface is slippery, e.g. due to snow, rain and/or ice. Hence, a second vehicle that is not able to decrease its speed at a desired rate can be reliably detected.

In an example, the first data is indicative of an actual orientation of the second vehicle and the second data is indicative of an expected orientation of the second vehicle. The second vehicle is determined to be sliding if the first data and the second data are indicative of the actual orientation differing from the expected orientation at least by a predefined orientation threshold. The predefined orientation threshold may be 10°, 20°, 30° or more. The actual orientation of the second vehicle may be obtained from an orientation of a side area of the second vehicle. Moreover the actual orientation of the second vehicle may be obtained from an orientation of a front area or a rear area of the second vehicle. It is to be noted that an orientation of a front area or a rear area of a vehicle is perpendicular to an overall orientation of the vehicle. Hence, an orientation of the second vehicle can be obtained from an orientation of its front area or its rear area by correcting the orientation of the front area or the rear area by a 90 degree angle. As already explained above, the expected orientation of the second vehicle can be obtained from a trajectory that the first vehicle and/or the second vehicle has completed. This has the effect that an actual orientation of the second vehicle can be reliably determined and compared to the expected orientation. If the actual orientation of the second vehicle and the expected orientation of the second vehicle do not match to a predefined extent or more, the second vehicle is determined to be sliding.

In an example, the actual orientation may be derived from an aspect ratio of a side area of a wheel of the second vehicle and/or from an aspect ratio of a side area of the second vehicle. Depending on a viewing angle, a side area of the wheel of the second vehicle has the shape of an ellipse. This is due to an inclined perspective on the circular side area of the wheel. It is noted that a circle is understood as a special case of an ellipse. Hence, also when viewed from a direction perpendicular to the side area of the wheel, the shape of the wheel comprises an ellipse. An ellipse comprises two major axes standing perpendicularly on each other. If the ellipse does not fulfill the special case of a circle, the first major axis marks the largest diameter of the ellipse and the second major axis marks the smallest diameter of the ellipse. The ratio of the length of the first major axis to the length of the second major axis is defined as the aspect ratio of the side area of a wheel of the second vehicle. The orientation of the side area of non-steered wheels of a vehicle substantially corresponds to an orientation of a side area of the vehicle. Hence, like the orientation of the side area of the vehicle, the orientation of the side area of the non-steered wheel is indicative of an orientation of the vehicle. In a traffic scenario, the visible length of the first major axis does not change when the orientation of the second vehicle changes with respect to first vehicle. However the visible length of the second major axis does change when the orientation of the second vehicle changes with respect to the first vehicle. Hence, the aspect ratio of the side area of a non-steered wheel of the second vehicle allows determining the orientation of the second vehicle. A non-steered wheel may be identified by being a rear wheel of a vehicle. Additionally or alternatively, an information on a non-steered wheel may be obtained from a look-up table on the data processing apparatus of the first vehicle comprising information which wheel of a given vehicle model is steered and which wheel is not. In another alternative, the look-up table may be provided on a data storage means which is located external to the first vehicle but form which the information on steered and non-steered wheels may be withdrawn. A similar explanation holds for an aspect ratio of the side area of the second vehicle. However, even when viewed from a direction perpendicular to the side area, an aspect ratio of the maximum height and the maximum length of the side area differs depending on the vehicle model. For this case, the data processing apparatus of the first vehicle may obtain a default aspect ratio for a determined vehicle model from the look-up table. The default aspect ratio is the ratio of the maximum height and maximum length of the side area of the vehicle. The data processing apparatus of the first vehicle may determine the orientation of the second vehicle depending on the extent to which the aspect ratio of the second vehicle visible to the first vehicle differs from the default aspect ratio. The aspect ratio of the side area of a wheel of the second vehicle and the difference between default and visible aspect ratio of the side area of the second vehicle may also be combined in the determination of the orientation of the second vehicle.

In an example, the expected orientation may be derived from at least one road marking and/or at least one road barrier. The expected orientation of the second vehicle is parallel to the orientation of the at least one road marking and/or the at least one road barrier at a location of the second vehicle. In other words, the second vehicle is expected to be oriented along a driving direction of the lane that it is using. Deriving the expected vehicle orientation from at least one road marking and/or from at least one road barrier gives a reliable indication in which direction the second vehicle should be oriented in order not to pose a danger to any other traffic participants.

In an example, the method further comprises obtaining third data indicative of a friction property of a road, wherein the method is executed if the third data are indicative of a friction property exceeding a friction threshold or the third data are indicative of a friction property being lower than the friction threshold. Obtaining the third data may involve receiving or determining the third data. The friction property may be a coefficient of friction or its inverse, namely a coefficient of gliding. When a surface of a road is covered with snow, is wet and/or icy, the coefficient of friction may be particularly low and the corresponding coefficient of gliding may be particularly high. A friction threshold for a coefficient of friction may be 0.1 or less. Consequently, a friction threshold for a coefficient of gliding may be 10 or more. The friction property may be obtained from rotational speed sensors attached to wheels of the first vehicle, which may indicate a slippery road surface by a difference in rotational speed of two wheels. Additionally or alternatively, the friction property may be estimated from images of the road surface obtained from a camera in the first vehicle. A particularly bright road surface may indicate that it is covered with snow, is wet and/or icy. The method only being executed if the third data exceeds or is below the friction threshold has the effect that computational resources on the data processing apparatus executing the method can be saved. In simplified words, the method for determining whether a second vehicle is sliding is only executed if there is a certain risk that the second vehicle may be sliding.

According to a second aspect, there is provided a method for controlling a first vehicle, wherein a second vehicle is located in the surroundings of the first vehicle. The method comprises:
- determining whether the second vehicle is sliding according to the method according to the present disclosure for determining whether a second vehicle is sliding, and
- causing the first vehicle to perform a collision mitigation maneuver and/or causing the first vehicle to provide a warning for another traffic participant and/or causing the first vehicle to provide an instruction for another traffic participant.
The collision mitigation maneuver may, for instance, involve increasing a distance to the second vehicle, causing the first vehicle to come to a standstill or causing the first vehicle to pull over to a side of the road. This has the effect that a collision risk between the first vehicle and the second vehicle is mitigated. The warning for another traffic participant may be optical or acoustic and/or may comprise transmittal of an information. In an example, the warning involves one or more of a warning sound, flashing lights or a message informing the other traffic participant of details of the sliding vehicle, e.g. a type of the sliding vehicle, a direction from which the sliding vehicle is approaching or a distance to the sliding vehicle. This has the effect that other traffic participants, such as pedestrians, cyclists or other vehicles, can get out of the way of the sliding vehicle. Thus, a collision risk between the other traffic participants and the second vehicle is mitigated. The first vehicle may also provide instructions for another traffic participant, for example to accelerate, to decelerate, to turn or not to turn into a certain direction. In particular, the first vehicle may provide instructions to the second vehicle in which direction the steering wheel or, in case of an autonomous vehicle, the steered wheels should be turned. The recommendation to the second vehicle may be based on an actual orientation of the second vehicle with respect to an expected orientation of the second vehicle. This has the effect that the steered wheels of the second vehicle may be turned in a direction so that the actual orientation of the second vehicle aligns with the expected orientation of the second vehicle again.

The methods of the first and second aspect may be at least partly computer-implemented, and may be implemented in software or in hardware, or in software and hardware. Further, the methods may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

According to a third aspect, there is provided a data processing apparatus comprising means for carrying out the method of the first and/or the method of the second aspect. The data processing apparatus may be attached to or housed in the first vehicle or the infrastructure element. Hence, the data processing apparatus puts the first vehicle or the infrastructure element in a position so that the method according to the first and/or the method according to the second aspect can be executed from their respective perspective. This enhances road safety.

According to a fourth aspect, there is provided a computer program comprising instructions which, when the computer program is executed by a computer, cause the computer to carry out the method of the first aspect of the present disclosure and/or the method of the second aspect of the present disclosure. Using such a computer program a determination whether the second vehicle is sliding or not may be performed in a reliable manner. Having an information available indicating whether the second vehicle is sliding or not enhances road safety since other traffic participants, e.g. the first vehicle, are able to adapt to this.

According to a fifth aspect, there is provided a computer-readable storage medium comprising instructions which, when executed by a computer, cause the computer to carry out the method of the first aspect of the present disclosure and/or the method of the second aspect of the present disclosure. In particular, the computer-readable storage medium comprises a look-up table providing information on a type of drive, e.g. front wheel drive, rear wheel drive or four wheel drive, and on a default aspect ratio of a side area of a vehicle depending on vehicle models of different manufacturers. Using such a computer-readable storage medium a determination whether the second vehicle is sliding or not may be performed in a reliable manner. Having an information available indicating whether the second vehicle is sliding or not enhances road safety since other traffic participants, e.g. the first vehicle, are able to adapt to this.

It should be noted that the above examples may be combined with each other irrespective of the aspect involved. Any example of any of the two presented methods having been explained from the perspective of the first vehicle can also be executed from the perspective of the infrastructure element and vice versa.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a first vehicle comprising a data processing apparatus according to the present disclosure,
- Figure 2: shows an infrastructure element comprising a data processing apparatus according to the present disclosure,
- Figure 3: shows a first traffic scenario in which the first vehicle as shown in Figure 1 executes a method according to the present disclosure for controlling a first vehicle and a method according to the present disclosure for determining whether a second vehicle is sliding,
- Figure 4: shows a second traffic scenario in which the first vehicle as shown in Figure 1 executes a method according to the present disclosure for controlling a first vehicle and a method according to the present disclosure for determining whether a second vehicle is sliding,
- Figure 5: shows a third traffic scenario in which the first vehicle as shown in Figure 1 executes a method according to the present disclosure for controlling a first vehicle and a method according to the present disclosure for determining whether a second vehicle is sliding,
- Figure 6: shows a fourth traffic scenario in which the first vehicle as shown in Figure 1 executes a method according to the present disclosure for controlling a first vehicle and a method according to the present disclosure for determining whether a second vehicle is sliding,
- Figure 7: illustrates a second vehicle with side areas of its wheels having been detected during execution of the method according to the present disclosure for determining whether a second vehicle is sliding,
- Figure 8: shows a fifth traffic scenario in which the first vehicle as shown in Figure 1 executes a method according to the present disclosure for controlling a first vehicle and a method according to the present disclosure for determining whether a second vehicle is sliding,
- Figure 9: illustrates a second vehicle with one of its side areas having been detected during execution of the method according to the present disclosure for determining whether a second vehicle is sliding,
- Figure 10: shows a sixth traffic scenario in which the first vehicle as shown in Figure 1 executes a method according to the present disclosure for controlling a first vehicle and a method according to the present disclosure for determining whether a second vehicle is sliding,
- Figure 11: illustrates a head-up display of a third vehicle displaying a warning of a sliding second vehicle, wherein the warning is provided to the third vehicle by the first vehicle as shown in Figure 1 while executing the method according to the present disclosure for controlling the first vehicle,
- Figure 12: schematically shows steps of the method according to the present disclosure for controlling a first vehicle, and
- Figure 13: schematically shows steps of the method according to the present disclosure for determining whether a second vehicle is sliding.

### DETAILED DESCRIPTION

The Figures are merely schematic representations and serve only to illustrate examples of the disclosure. Identical or equivalent elements are in principle provided with the same reference signs.

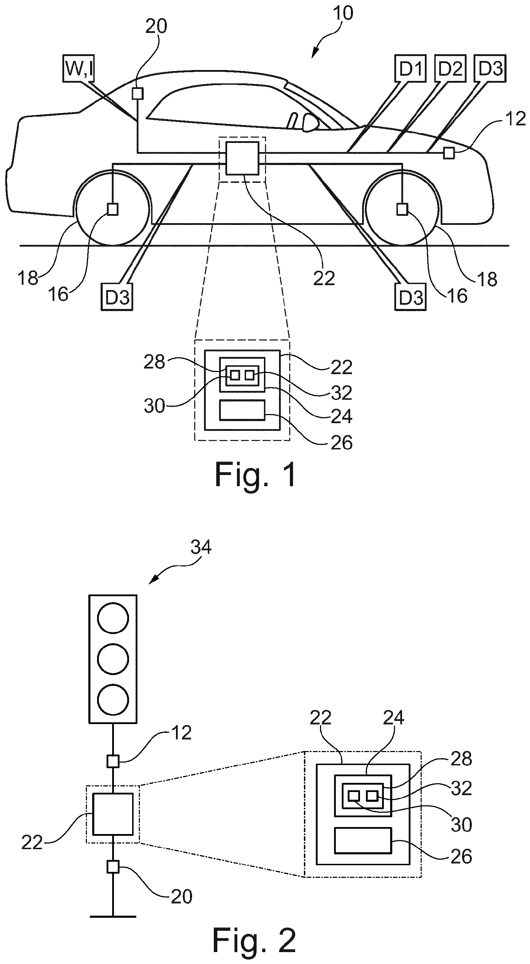

Figure 1 shows a first vehicle 10.

The first vehicle 10 comprises an environment detection sensor 12 for detecting an environment of the first vehicle 10.

In particular, the environment detection sensor 12 can detect a second vehicle 14 that is in a traffic environment of the first vehicle 10.

The environment detection sensor 12 can be a camera and/or a radar unit that is situated in a front of the first vehicle 10.

Of course, there may be multiple environment detection sensors 12 that may also be situated in a rear or at the sides of the first vehicle 10. However, for the ease of representation, only one environment detection sensor 12 is shown in Figure 1.

The first vehicle 10 also comprises rotational speed sensors 16. Each rotational speed sensor 16 is associated with a wheel 18 of the first vehicle 10.

Each of the rotational speed sensors 16 is configured to detect a rotational speed of the associated wheel 18.

Moreover, the first vehicle 10 comprises a communication interface 20.

In the present example, the communication interface 20 may be a loudspeaker, a light such as a warning light. According to other alternatives, headlights of the first vehicle 10, a horn of the first vehicle 10 or an electromagnetic communication means such as an antenna for Bluetooth, Wi-Fi or mobile communications of the first vehicle may form the communication interface 20.

Furthermore, the first vehicle 10 comprises a data processing apparatus 22.

The data processing apparatus 22 is communicatively connected to the environment detection sensor 12, the rotational speed sensors 16 and the communication interface 20.

The data processing apparatus 22 comprises a data storage unit 24 and a data processing unit 26.

The data storage unit 24 comprises a computer-readable storage medium 28.

On the computer-readable storage medium 28, there is provided a look-up table 30 comprising data on a type of drive, i.e. front wheel drive, rear wheel drive or four wheel drive, for a plurality of vehicle models from a plurality of vehicle manufacturers. Thus, using the look-up table 30, the type of drive may be determined for a specific vehicle model of a specific vehicle manufacturer.

Moreover, the look-up table 30 comprises data on a default aspect ratio of a side area of each of the plurality of vehicle models from the plurality of vehicle manufacturers. The default aspect ratio is the ratio of the maximum height to the maximum length of a side area of the associated vehicle.

On the computer-readable storage medium 28, there is also provided a computer program 32.

The computer program 32 and, thus, also the computer-readable storage medium 28, comprise instructions which, when executed by the data processing unit 26, or, more generally speaking, a computer, cause the computer or the data processing unit 26 to carry out a method for controlling the first vehicle 10 and a method for determining whether a second vehicle 14 is sliding. The method for controlling the first vehicle 10 may be called a first method and the method for determining whether a second vehicle is sliding may be called a second method.

Consequently, the data storage unit 24 and the data processing unit 26 form means for carrying out the method for controlling the first vehicle 10 and the method for determining whether a second vehicle 14 is sliding.

As will be described in more detail further below, the second method forms part of the first method.

Figure 2 shows an infrastructure element 34.

In the present example, the infrastructure element 34 is a traffic light.

In other examples, it is also conceivable that the infrastructure element 34 is a road sign, a lamp pole, a traffic camera system or a building such as a bridge or a house.

Like the first vehicle 10, the infrastructure element 34 comprises an environment detection sensor 12, a communication interface 20 and a data processing apparatus 22.

The functionalities of the environment detection sensor 12, of the communication interface 20 and of the data processing apparatus 22 of the infrastructure element 34 are identical to the respective components of the first vehicle 10. This is why a detailed description of functionalities of said components of the infrastructure element 34 will be omitted at this point.

In the following, the method for controlling the first vehicle 10, or the first method, will be explained in detail.

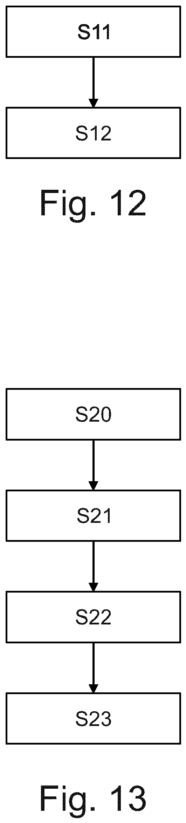

The method for controlling the first vehicle comprises steps S11 and S 12 (cf. Figure 12).

Step S11 comprises determining whether the second vehicle 14 is sliding. To this end, the method for determining whether a second vehicle 14 is sliding, or the second method, is executed. This second method will be explained in detail further below.

Step S22 may comprise causing the first vehicle 10 to perform a collision mitigation maneuver.

The collision mitigation maneuver may comprise a lane change, an increase of a distance between the first vehicle 10 and the second vehicle 14, a reduction of speed of the first vehicle 10 even until the first vehicle 10 comes to a standstill and/or causing the first vehicle 10 to pull over to a side of a road 36.

Additionally or alternatively, step S22 may comprise causing the first vehicle 10 to provide a warning W to another traffic participant.

Another traffic participant may be a third vehicle and/or a pedestrian and/or a cyclist or the like.

The warning W may be provided to the other traffic participant via the communication interface 20 of the first vehicle 10.

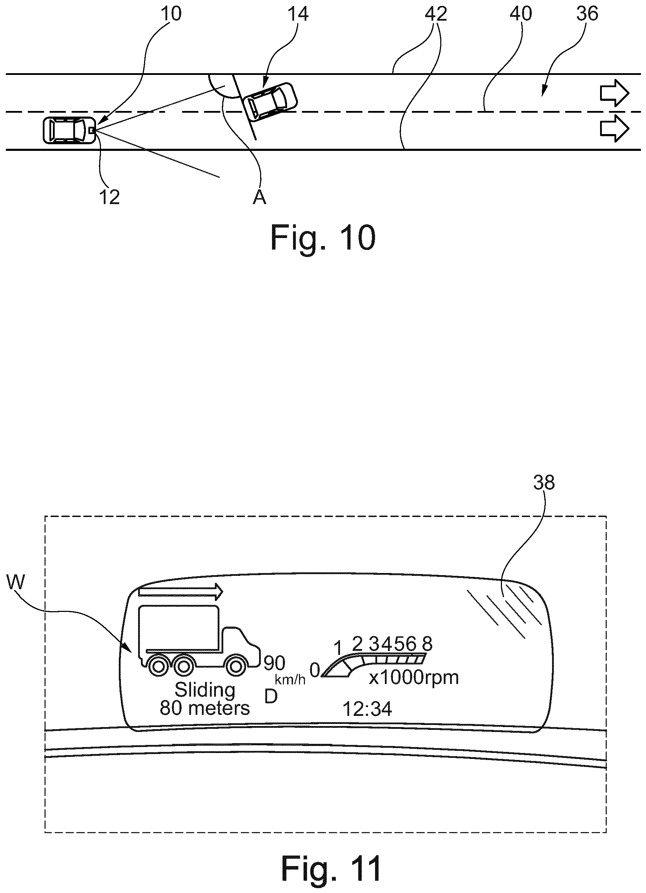

The warning W may involve a warning sound such as a siren or honking, flashing lights and/or a message comprising the type of the second vehicle 14, which is sliding, the distance to the second vehicle 14 and/or a direction of location of the second vehicle 14 with respect to the other traffic participant. Such a message may be displayed on a head-up display 38 of a third vehicle. This is illustrated in Fig. 11.

Also, the warning W may involve a message about a collision that is likely to occur due to the sliding of the second vehicle 14.

Further additionally or alternatively, step S22 may comprise causing the first vehicle 10 to provide an instruction I for another traffic participant.

The instruction I for another traffic participant may comprise a signal or a message to move out of the way or not to get into the way of the second vehicle 14, which is sliding.

In this context and particularly if the other traffic participant is a third vehicle, the instruction I may comprise a recommendation to accelerate, to brake and/or to steer in a particular direction.

If the recipient of the instruction I is the second vehicle 14, the instruction I may also comprise a recommendation on a steering direction and/or on a steering angle in order to counteract the sliding movement of the second vehicle 14.

In this case, the instruction I may be based on an orientation of the second vehicle 14 with respect to road markings 40 and/or a road barrier 42. Different possibilities of determining the orientation of the second vehicle 14 by the first vehicle 10 or by the infrastructure element 34 will be explained further below in the context of the second method for determining whether a second vehicle 14 is sliding.

The warning W or the instruction I for another traffic participant may be provided from the first vehicle 10 to the other traffic participant directly or via a cloud server.

Particularly in case of the warning W or the instruction I being provided via a cloud server, the first vehicle 10 may additionally provide data to the cloud server concerning a location where sliding of the second vehicle 14 or a slippery road surface have been detected by the first vehicle 10.

The detection of a slippery road surface by the first vehicle 10 will be explained further below in conjunction with third data D3 involved in the method for determining whether a second vehicle 14 is sliding.

In case of the warning W or the instruction I being provided via a cloud server, the other traffic participant may arrive at the location where sliding of a vehicle or a slippery road surface was detected at a later point in time than when sliding of a vehicle or the slippery road surface was detected. This enables the other traffic participant to be warned early of locations with road conditions that likely cause sliding.

This further enables other traffic participants to apply additional caution when they arrive at a location where sliding of a vehicle or a slippery road surface have been detected.

Locations with road conditions that favor sliding of vehicles may for example be exposed roadways, such as bridges, during wintertime.

In the following, the method for determining whether a second vehicle 14 is sliding from a perspective of a first vehicle 10 or from a perspective of an infrastructure element 34 will be explained.

As shown in Figure 13, the second method comprises optional step S20, and non-optional steps S21, S22 and S23.

Step S21 comprises obtaining first data D1 indicative of an actual driving behavior of the second vehicle 14.

Step S22 comprises obtaining second data D2 indicative of an expected driving behavior of the second vehicle 14.

Step S23 comprises determining whether the second vehicle 14 is sliding or not based on a comparison of the first data D1 and the second data D2.

The steps S21, S22 and S23 will be explained in the following with respect to different traffic scenarios. Optional step S20 will be explained further below.

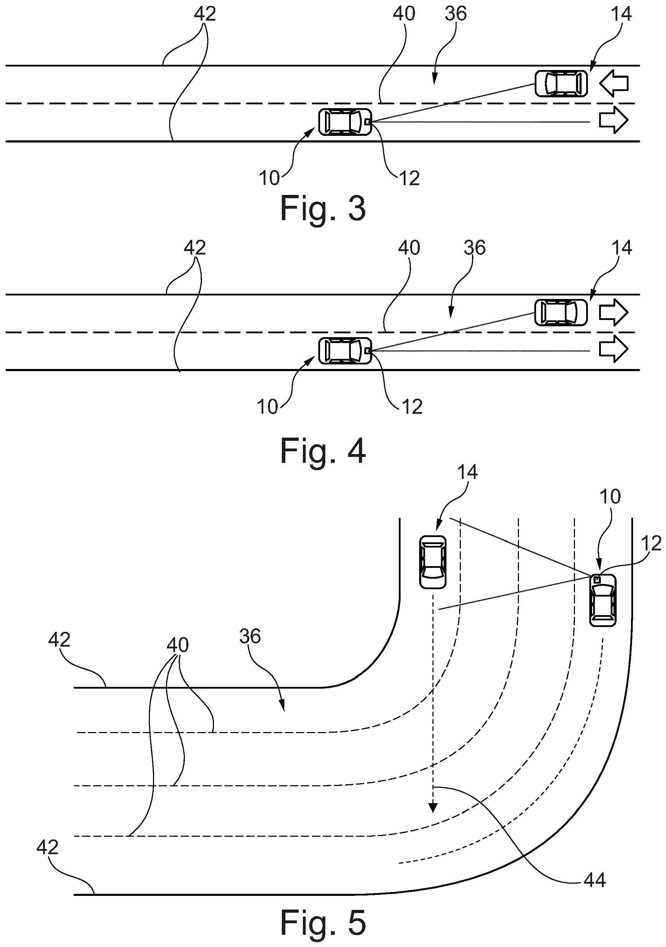

A first traffic scenario will be explained with respect to Figure 3.

In the first traffic scenario, the first vehicle 10 and the second vehicle 14 are driving on a road 36 in opposite directions (cf. arrows).

The environment detection sensor 12 of the first vehicle detects the second vehicle 14. This comprises detecting the wheels 18 of the second vehicle 14.

As has been mentioned before, the environment detection sensor 12 may comprise a camera. The wheels 18 may be detected using a feature extraction algorithm.

The data processing apparatus 22 of the first vehicle 10 then determines a rotational speed of wheels 18 of the second vehicle 14 visible to the environment detection sensor 12. This can be achieved by tracking a reference point on a rim of the wheels 18 of the second vehicle 14.

The first data D1 is indicative of the rotational speed of a non-driven wheel 18 of the second vehicle 14.

The second data D2 is indicative of the rotational speed of a driven wheel 18 of the second vehicle 14.

Thus, in case of sliding of the second vehicle 14, the driven wheels 18 will have a rotational speed higher than the rotational speed of the non-driven wheels 18 the second vehicle 14 is travelling on a straight trajectory or is at a standstill.

When the second vehicle 14 is driving along a curve, the type of drive of the second vehicle 14, namely front wheel drive or rear wheel drive is considered for the designation of driven and non-driven wheels 18. The type of drive of the second vehicle can be obtained from the look-up table 30 on the computer readable storage medium 28 based on a manufacturer and model of the second vehicle 14 determined by the computer program 32 on the data processing apparatus 22.

For the sake of clarification, it is noted that the type of drive of the second vehicle 14 may also be four wheel drive. The rotational speed of the wheels 18 of a second vehicle 14 with four wheel drive may differ due to an interaxle differential.

When the second vehicle 14 with four wheel drive travels along a straight trajectory or is at a standstill, the rotational speed of the wheel 18 spinning at the higher rotational speed is taken as the second data D2.

When the second vehicle 14 with four wheel drive travels along a curve, the rotational speed of the wheel 18 spinning at the higher rotational speed is taken as the second data D2 as long as it exceeds the rotational speed of the wheel 18 spinning at the lower rotational speed by a predefined margin. The predefined margin may, for example, be 10 %, 20 % or 30 %.

In any case of the first traffic scenario, the second vehicle 14 is determined to be sliding if the second data D2 exceeds the first data D 1 by a predefined margin.

Again, the predefined margin may, for example, be 10 %, 20 % or 30 %.

In case the second data D2 does not exceed the first data D1 by the predefined margin, the second vehicle 14 is determined to not be sliding.

In addition to a rotational speed of a wheel 18 of the second vehicle 14, the data processing apparatus 22 of the first vehicle 10 may determine an actual vehicle speed from detections of the second vehicle 14 by the environment detection sensor 12 of the first vehicle 10.

In case the environment detection sensor 12 is a camera, the determination of the actual vehicle speed is based on detections of locations of the second vehicle 14 by the camera at two different points in time.

In case the environment detection sensor 12 is a radar unit, the determination of the actual vehicle speed is based on a reflection of radar waves off the second vehicle 14 at a single point in time.

The actual speed of the second vehicle 14 can be taken as the first data D1.

The rotational speed of the detected wheel 18 of the second vehicle 14 is multiplied by a radius of the respective wheel 18 by the data processing apparatus 22 of the first vehicle 10 in order to obtain an expected speed of the second vehicle 14.

Like the rotational speed of the respective wheel 18, the radius of the respective wheel 18 can be determined by the data processing apparatus 22 of the first vehicle 10 based on a detection of the camera of the first vehicle 10.

The second vehicle 14 is determined to be sliding if the expected speed of the second vehicle 14 differs from the actual speed of the second vehicle 14 by a predefined margin or more.

The predefined margin may, for example, be 10 %, 20 % or 30 %.

In case the expected speed of the second vehicle 14 does not differ from the actual speed of the second vehicle 14, the second vehicle 14 is determined to not be sliding.

A second traffic scenario will be explained with respect to Figure 4.

Only the differences with respect to the first traffic scenario will be mentioned.

In the second traffic scenario, the first vehicle 10 is driving behind the second vehicle 14 and into the same direction as the second vehicle 14.

The data processing apparatus 22 of the first vehicle 10 determines, via the detection of a brake light by the environment detection sensor 12 of the first vehicle 10, that a brake of the second vehicle 14 is actuated.

This is taken as the second data D2.

Like in the first traffic scenario, an actual speed of the second vehicle 14 is taken as the first data D 1.

Additionally, the first data D1 comprises an actual speed of the second vehicle 14 at a different point in time when the second vehicle 14 has already actuated its brake in order to determine if the second vehicle 14 is actually decelerating.

If the brake of the second vehicle 14 is determined to be actuated, for example by means of a lit brake light, and a rate of deceleration of the second vehicle 14 is determined to be below or equal to a predefined threshold, the second vehicle 14 is determined to be sliding.

If the brake of the second vehicle 14 is determined to be actuated and the rate of deceleration of the second vehicle 14 is determined to be above the predefined threshold, the second vehicle 14 is determined not to be sliding.

In the second traffic scenario, the predefined threshold may be 1 m/s², 2 m/s² or 3 m/s².

A third traffic scenario will be explained with reference to Figure 5.

Again, only the differences with respect to the first and second traffic scenarios will be explained.

As first data D1, an actual vehicle trajectory 44 of the second vehicle 14 is obtained.

The actual vehicle trajectory 44 of the second vehicle 14 is determined by the data processing apparatus 22 of the first vehicle 10 based on detections of the second vehicle 14 by the environment detection sensor 12 of the first vehicle 10 at at least two different points in time.

As second data D2, an expected vehicle trajectory 44 of the second vehicle 14 is obtained.

The expected vehicle trajectory 44 may be based on road markings 40 or a road barrier 42 detected by the environment detection sensor 12 of the first vehicle 10 and/or a trajectory 44 that the first vehicle has completed.

In Figure 5, the actual trajectory 44 of the second vehicle 12 is straight, as can be seen from the drawn-in dotted arrow.

The dashed road markings 40 and the road barriers 42, which are drawn as solid lines, as well as the trajectory 44 that the first vehicle has completed, which is drawn-in as a dotted line, however indicate that the second vehicle 12 should be driving a curve.

Based on the discrepancy between the actual trajectory 44 of the second vehicle 14 and the expected trajectory of the second vehicle 14, the second vehicle 14 is determined to be sliding.

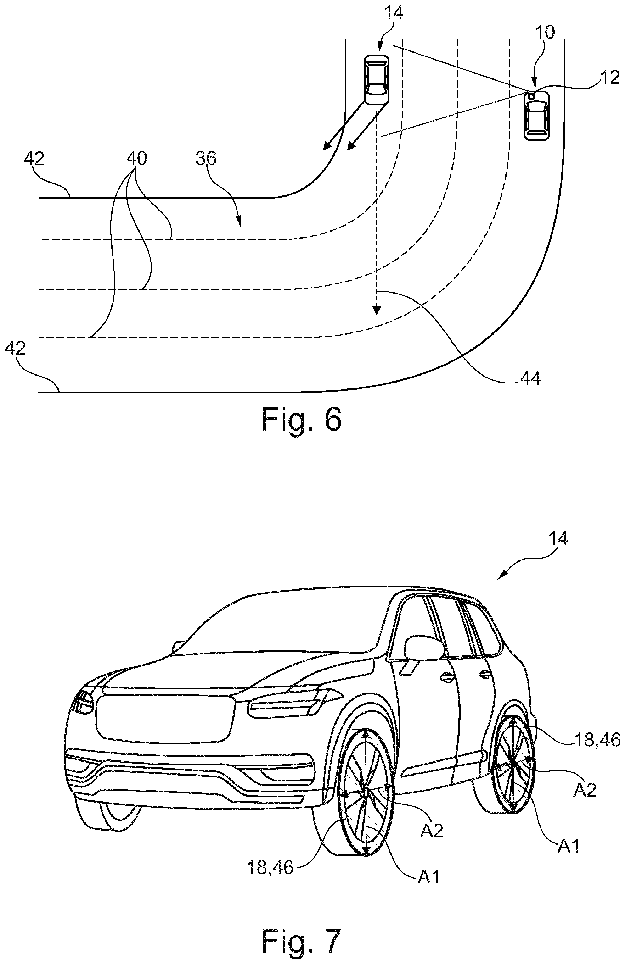

A fourth traffic scenario will be explained with reference to Figures 6 and 7.

Again, only the differences with respect to the first, second and third traffic scenarios will be explained. As before, the above explanations apply mutatis mutandis for the remaining aspects.

Like in the third traffic scenario, the first data D1 is indicative of an actual trajectory 44 of the second vehicle 14 and the second data D2 is indicative of an expected trajectory of the second vehicle 14.

The expected trajectory of the second vehicle 14 is determined from an orientation of the steered wheels 18 of the second vehicle 14.

The orientation of the steered wheels 18 of the second vehicle 14 is obtained by the data processing apparatus 22 of the first vehicle 10 from a detection of the environment detection sensor 12.

In more detail, a side area 46 of the wheels 18 of the second vehicle 14 is detected by the environment detection sensor 12 and identified by the data processing apparatus 22 of the first vehicle 10, e.g. using a feature detection algorithm.

As shown in Figure 7 and for reasons of perspective view, the side area 46 of the wheels 18 of the second vehicle 14 are of the shape of an ellipse.

If the data processing apparatus 22 of the first vehicle 10 detects that an aspect ratio of the ellipse, in more detail a ratio of the two major axes A1, A2 of an ellipse as indicated in Figure 7, suddenly changes, the respective wheel 18 is determined to be a steered wheel 18.

From the aspect ratio of the side area 46 of the steered wheels 18, the data processing apparatus 22 of the first vehicle 10 can derive a pointing direction of the steered wheels 18.

In Figure 6, the pointing direction of the steered front wheels 18 is indicated by two solid arrows.

The expected vehicle trajectory 44 of the second vehicle 14, indicated by the pointing direction of the steered front wheels 18, differs from the actual vehicle trajectory 44 of the second vehicle 14, which is indicated by the dashed arrow.

Hence, the second vehicle 14 is determined to be sliding.

In more detail, the second vehicle 14 is determined to be sliding if the actual vehicle trajectory 44 differs from the expected vehicle trajectory 44 by a predefined margin or more.

The predefined margin may, for example, be 10°, 20° or 30°.

Additionally or alternatively, the second vehicle 14 may not only be determined to be sliding if the actual vehicle trajectory 44 differs from the expected vehicle trajectory 44 by a predefined margin but also if either the actual vehicle trajectory 44 or the expected vehicle trajectory 44 suddenly changes by a predefined increment.

For example, if the expected vehicle trajectory of the second vehicle 14 changes due to an abrupt steering maneuver, the wheels 18 of the second vehicle 14 cannot reasonably be assumed to have stayed in frictional engagement with the road surface, i.e. it is assumed that the wheels 18 have been sliding.

In another example, the second vehicle 14 could get hit by another vehicle, resulting in an accident that drastically changes the second vehicle's 14 trajectory 44. Also in this case, the wheels 18 of the second vehicle 14 cannot reasonably be assumed to have stayed in frictional engagement with the road surface without sliding.

The predefined increment can be 90° per second, 120° per second, 150° per second or more.

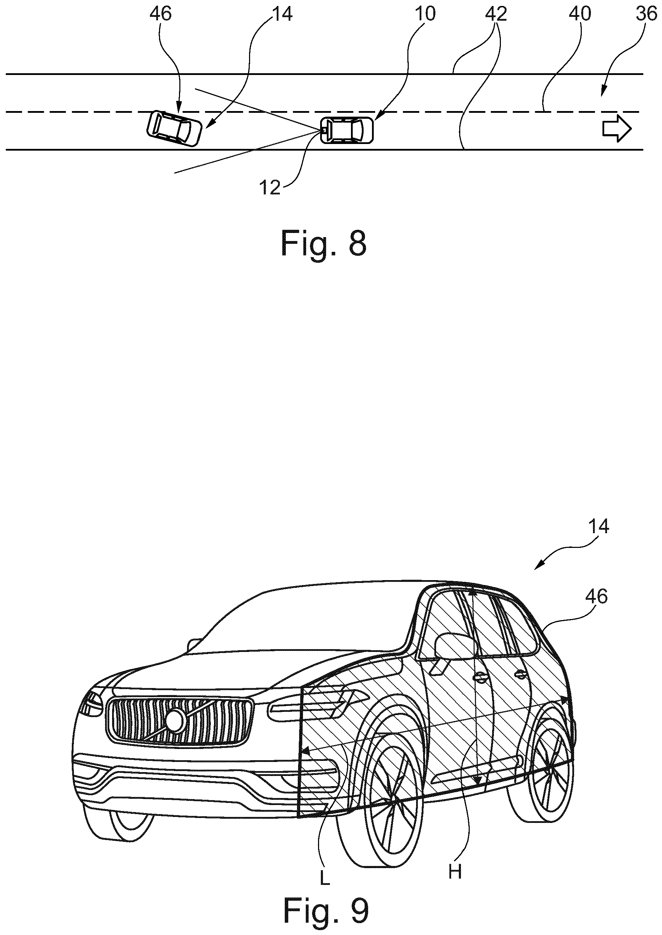

A fifth traffic scenario will be explained with reference to Figures 8 and 9.

Again, only the differences with respect to the first, second, third and fourth traffic scenarios will be explained. As before, the above explanations apply mutatis mutandis for the remaining aspects.

In Figure 8, the first vehicle 10 is driving in front of the second vehicle 14. Both the first vehicle 10 and the second vehicle 14 are driving into the same direction (cf. arrow).

The data processing apparatus 22 of the first vehicle 10 determines an orientation of the second vehicle 14 through the detection of a side area 46 of the second vehicle 14 by the environment detection sensor 12, which is in the present case at least comprises a component located in a rear of the first vehicle 10, e.g. a rearward facing camera.

A side area 46 of the second vehicle 14 is exemplarily shown in Figure 9.

If the second vehicle 14 follows the first vehicle 10 on a straight lane and a side area 46 of the second vehicle 14 becomes detectable for the environment detection sensor 12 of the first vehicle 10, then the side area 46 of the second vehicle 14 must be angled with respect to road markings 40, which are shown as dashed lines in Figure 8, and/or road barriers 42, which are shown as solid lines in Figure 8.

The data processing apparatus 22 of the first vehicle 10 uses the orientation of the side area 46 of the second vehicle 14 as first data D 1.

In more detail, the orientation of the side area 46 of the second vehicle 14 can be obtained from a difference between a detected aspect ratio of the side area 46 of the second vehicle 14 to a default aspect ratio of a side area 46 of the second vehicle 14.

The default aspect ratio of a side area 46 of a vehicle is defined as the ratio between the maximum height H and the maximum length L of the side area 46.

A default aspect ratio for a vehicle model depending on different manufacturers are provided on the look-up table 30 on the computer-readable storage medium 28 of the data processing apparatus 22 of the first vehicle 10.

Due to reasons of perspective view, the height H of the side area 46 visible to the environment detection sensor 12 of the first vehicle 10 remains unchanged in a traffic scenario.

However, the length L of the side area 46 visible to the environment detection sensor 12 of the first vehicle 10 does change in a traffic scenario depending on the orientation of the side area 46 of the second vehicle 14 to the first vehicle 10.

As second data D2, a direction of road markings 40 and/or road barriers 42 detected by the environment detection sensor 12 is used.

If the orientation of the side area 46 of the second vehicle 14 differs from the direction of road markings 40 and/or road barriers 42 by a predefined threshold or more, the second vehicle 14 is determined to be sliding.

If the orientation of the side area 46 of the second vehicle 14 differs from the direction of road markings 40 and/or road barriers 42 less than a predefined threshold, the second vehicle 14 is determined not to be sliding.

The predefined threshold may be 10°, 20°, or 30°.

It is to be noted that while the fifth traffic scenario has been explained at the example of a traffic scenario in which the second vehicle 14 was following the first vehicle 10, the same explanations would hold for a traffic scenario in which the first vehicle 10 is following the second vehicle 14. The first vehicle 10 would only need to comprise a component of the environment detection sensor 12 located at its front. Also, the first vehicle 10 and the second vehicle 14 do not necessarily have to use the same lane of a road 36.

A sixth traffic scenario is explained with reference to Figure 10.

Again, only the differences with respect to the first, second, third, fourth and fifth traffic scenarios will be explained. Otherwise, the above explanations apply mutatis mutandis.

In the sixth traffic scenario, the first vehicle 10 is following the second vehicle 14. This means that both the first vehicle 10 and the second vehicle 14 are travelling into the same direction.

In contrast to the fifth traffic scenario, the orientation of the second vehicle 14 is determined from an angle A between a rear end of the second vehicle 14 and road markings 40 and/or a road barrier 42 by an environment detection sensor 12 in the front of the first vehicle 10.

In other words, the angle A between the rear end of the second vehicle 12 and the road markings 40 and/or the road barrier 42 is taken as the first data D1.

If the angle A between the rear end of the second vehicle 14 and the road markings 40 and/or the road barrier 42 differs from a 90 degree angle by a predefined threshold or more, the second vehicle 14 is determined to be sliding.

If the angle A between the rear end of the second vehicle 14 and road markings 40 and/or a road barrier 42 differs from a 90 degree angle by less than a predefined threshold, the second vehicle 14 is determined not to be sliding.

The predefined threshold may be 10°, 20°, or 30°.

It is to be noted that while the sixth traffic scenario has been explained at the example of a traffic scenario in which the first vehicle 10 is following the second vehicle 14. The same explanations also hold for a traffic scenario in which the second vehicle 14 is following the first vehicle 10. The first vehicle 10 would only need to comprise an environment detection sensor 12 having a component located in its rear and detect an orientation of the front end of the second vehicle 14 with respect to road markings 40 and/or a road barrier 42.

For the determination of the angle A between the rear end or front end of the second vehicle 14 and the road markings 40 and/or the road barrier 42, the vehicles 10, 14 do not even have to follow each other at all. Said angle A can also be determined by the data processing apparatus 22 of the first vehicle 10 if the first vehicle 10 and the second vehicle 14 are approaching each other.

It is to be noted that the above traffic scenarios have been explained with the first vehicle 10 moving. It applies to all of the above traffic scenarios that the first vehicle 10 may also be at a standstill. As a matter of fact, the second method for determining whether a second vehicle 14 is sliding may not only be carried out from the perspective of a first vehicle 10 but also from the perspective of an infrastructure element 34 as shown in Figure 2, which is stationary.

In any case, it is to be noted that the second method for determining whether a second vehicle 14 is sliding from a perspective of a first vehicle 10 or from a perspective of an infrastructure element 34 may comprise an optional step S20 (see Fig. 13).

The initial step S20 comprises obtaining third data D3 indicative of a friction property of a road 18, wherein the method for determining whether a second vehicle 14 is sliding is executed only if the third data D3 are indicative of a friction property exceeding a friction threshold or the third data D3 are indicative of a friction property being lower than the friction threshold.

A friction property of the road 18 may be estimated by the data processing apparatus 22 of the first vehicle 10 or of the infrastructure element 34 from detections of their environment detection sensor 12.

For example, a camera may detect a brightness of a road surface. A high brightness of a road surface indicates that it is covered with snow, is wet and/or icy.

The camera may also apply a polarization filter technique to help the data processing apparatus 22 estimate the friction property of the road 18.

In the context of estimation of friction property, the environment detection sensor 12 may also comprise a laser thermometer. A surface temperature of the road 18 of 0°C or below increases the likelihood of the road surface being slippery.

In case the method for determining whether a second vehicle 14 is sliding is carried out from the perspective of a first vehicle 10, the friction property may also be determined by the data processing apparatus 22 of the first vehicle 10 based on rotational speed detections of the rotational speed sensors 16 associated with the wheels 18 of the first vehicle 10.

If a difference in rotational speed between any two wheels 18 of the first vehicle 10 exceeds a predefined threshold, a slippery road surface may be indicated.

In this context, the predefined threshold may be 10%, 20% or 30%.

It is to be noted that the friction property may be determined as friction coefficient, which indicates a maximum traction of a wheel 18 when multiplied with the gravitational force of the vehicle weight resting on the respective wheel 18.

The friction property may also be defined as an inverse of a friction coefficient. The friction property then indicates a higher degree of slippage of the road surface the higher the friction property is.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: first vehicle
- 12: environment detection sensor
- 14: second vehicle
- 16: rotational speed sensor
- 18: wheel
- 20: communication interface
- 22: data processing apparatus
- 24: data storage unit
- 26: data processing unit
- 28: computer-readable storage medium
- 30: look-up table
- 32: computer program
- 34: infrastructure element
- 36: road
- 38: head-up display
- 40: road markings
- 42: road barrier
- 44: trajectory
- 46: side area

- A: angle
- A1: first major axis
- A2: second major axis
- D1: first data
- D2: second data
- D3: third data
- H: height
- I: instruction
- L: length
- W: warning

## Claims

1. A method for determining whether a second vehicle (14) is sliding from a perspective of a first vehicle (10) or from a perspective of an infrastructure element (34), the method comprising:
- obtaining first data (D1) indicative of an actual driving behavior of the second vehicle (14),
- obtaining second data (D2) indicative of an expected driving behavior of the second vehicle (14), and
- determining whether the second vehicle (14) is sliding or not based on a comparison of the first data (D1) and the second data (D2).

2. The method of claim 1, wherein the first data (D1) is indicative of a course of the actual driving behavior over time and/or wherein the second data (D2) is indicative of a course of the expected driving behavior over time.

3. The method of claim 2, wherein the second vehicle (14) is determined to be sliding if the first data (D1) and/or the second data (D2) change by a predefined increment or more within a predefined time interval.

4. The method of any one of the preceding claims, wherein the second data (D2) is generated based on first data (D1) associated with a first point in time which differs from the point in time to which the first data (D1) used for the comparison is associated.

5. The method according to any one of the preceding claims, wherein the first data (D1) is indicative of a rotational speed of a wheel (18) of the second vehicle (14) and the second data (D2) is indicative of a rotational speed of a wheel (18) of the second vehicle (14), and
wherein the second vehicle (14) is determined to be sliding if the first data (D1) and the second data (D2) indicate rotational speeds having a difference exceeding a predefined rotational speed threshold.

6. The method of claim 5, wherein the first data (D1) and the second data (D2) are indicative of a rotational speed of different wheels (18) of the second vehicle (14) respectively.

7. The method according to any one of the preceding claims, wherein the first data (D1) is indicative of a traveling speed of the second vehicle (14) and the second data (D2) is indicative of an actuation of a brake of the second vehicle (14), and wherein the second vehicle (14) is determined to be sliding if the second data (D2) is indicative of the brake being actuated and the first data (D1) is indicative of a speed decreasing at a rate lower than a predefined rate threshold.

8. The method according to any one of the preceding claims, wherein the first data (D1) is indicative of an actual orientation of the second vehicle (14), and
wherein the second data (D2) is indicative of an expected orientation of the second vehicle (14), and
wherein the second vehicle (14) is determined to be sliding if the first data and the second data are indicative of the actual orientation differing from the expected orientation at least by a predefined orientation threshold.

9. The method according to claim 8, wherein the actual orientation is derived from an aspect ratio of a side area (46) of a wheel (18) of the second vehicle (14) and/or from an aspect ratio of a side area (46) of the second vehicle (14).

10. The method according to claim 8 or 9, wherein the expected orientation is derived from at least one road marking (40) and/or at least one road barrier (42).

11. The method according to any of the preceding claims, further comprising obtaining third data (D3) indicative of a friction property of a road (18), wherein the method is executed if the third data (D3) are indicative of a friction property exceeding a friction threshold or the third data (D3) are indicative of a friction property being lower than the friction threshold.

12. A method for controlling a first vehicle (10), wherein a second vehicle (14) is located in the surroundings of the first vehicle (10), the method comprising:
- determining whether the second vehicle (14) is sliding according to the method of any of the preceding claims, and
- causing the first vehicle (10) to perform a collision mitigation maneuver and/or causing the first vehicle (10) to provide a warning (W) for another traffic participant and/or causing the first vehicle (10) to provide an instruction (I) for another traffic participant.

13. A data processing apparatus (22) comprising means for carrying out the method of any one of claims 1 to 11 or the method of claim 12.

14. A computer program (32) comprising instructions which, when the computer program (32) is executed by a computer, cause the computer to carry out the method of any one of claims 1 to 11 or the method of claim 12.

15. A computer-readable storage medium (28) comprising instructions which, when executed by a computer, cause the computer to carry out the method of any one of claims 1 to 11 or the method of claim 12.

## Amended claims

### Amended claims in accordance with Rule 137(2) EPC.

1. A method for controlling a first vehicle (10), wherein a second vehicle (14) is located in the surroundings of the first vehicle (10), wherein the method is executed using a data processing apparatus (22) comprising a data storage unit (24) and a data processing unit (26), the method comprising:
- determining whether the second vehicle (14) is sliding according to a method for determining whether a second vehicle (14) is sliding from a perspective of a first vehicle (10) or from a perspective of an infrastructure element (34), the method comprising:
▪ obtaining first data (D1) indicative of an actual driving behavior of the second vehicle (14), wherein the first data (D1) is obtained via an environment detection sensor (12),
▪ obtaining second data (D2) indicative of an expected driving behavior of the second vehicle (14), wherein the second data (D2) is obtained via an environment detection sensor (12), and
▪ determining whether the second vehicle (14) is sliding or not based on a comparison of the first data (D1) and the second data (D2),
wherein the first data (D1) is indicative of an actual orientation of the second vehicle (14),
wherein the actual orientation is derived from an aspect ratio of a side area (46) of a wheel (18) of the second vehicle (14) and/or from an aspect ratio of a side area (46) of the second vehicle (14),
wherein the second data (D2) is indicative of an expected orientation of the second vehicle (14), and
wherein the second vehicle (14) is determined to be sliding if the first data and the second data are indicative of the actual orientation differing from the expected orientation at least by a predefined orientation threshold; and
- causing the first vehicle (10) to perform a collision mitigation maneuver and/or causing the first vehicle (10) to provide a warning (W) for another traffic participant and/or causing the first vehicle (10) to provide an instruction (I) for another traffic participant via a communication interface (20).

2. The method of claim 1, wherein the first data (D1) is indicative of a course of the actual driving behavior over time and/or wherein the second data (D2) is indicative of a course of the expected driving behavior over time.

3. The method of claim 2, wherein the second vehicle (14) is determined to be sliding if the first data (D1) and/or the second data (D2) change by a predefined increment or more within a predefined time interval.

4. The method of any one of the preceding claims, wherein the second data (D2) is generated based on first data (D1) associated with a first point in time which differs from the point in time to which the first data (D1) used for the comparison is associated.

5. The method according to any one of the preceding claims, wherein the first data (D1) is indicative of a rotational speed of a wheel (18) of the second vehicle (14) and the second data (D2) is indicative of a rotational speed of a wheel (18) of the second vehicle (14), and
wherein the second vehicle (14) is determined to be sliding if the first data (D1) and the second data (D2) indicate rotational speeds having a difference exceeding a predefined rotational speed threshold.

6. The method of claim 5, wherein the first data (D1) and the second data (D2) are indicative of a rotational speed of different wheels (18) of the second vehicle (14) respectively.

7. The method according to any one of the preceding claims, wherein the first data (D1) is indicative of a traveling speed of the second vehicle (14) and the second data (D2) is indicative of an actuation of a brake of the second vehicle (14), and wherein the second vehicle (14) is determined to be sliding if the second data (D2) is indicative of the brake being actuated and the first data (D1) is indicative of a speed decreasing at a rate lower than a predefined rate threshold.

8. The method according to any of the preceding claims, wherein the expected orientation is derived from at least one road marking (40) and/or at least one road barrier (42).

9. The method according to any of the preceding claims, further comprising obtaining third data (D3) indicative of a friction property of a road (18), wherein the method is executed if the third data (D3) are indicative of a friction property exceeding a friction threshold or the third data (D3) are indicative of a friction property being lower than the friction threshold.

10. A data processing apparatus (22) comprising means for carrying out the method of any one of claims 1 to 9.

11. A computer program (32) comprising instructions which, when the computer program (32) is executed by a computer, cause the computer to carry out the method of any one of claims 1 to 9.

12. A computer-readable storage medium (28) comprising instructions which, when executed by a computer, cause the computer to carry out the method of any one of claims 1 to 9.
